Europäisches Patentamt

European Patent Office

Office européen des brevets

(11) Publication number: **0 111 871**
**A2**

# (12) EUROPEAN PATENT APPLICATION

(21) Application number: **83112494.6**

(22) Date of filing: **12.12.83**

(51) Int. Cl.³: **G 05 B 9/03**
**G 06 F 11/20**

(30) Priority: **18.12.82 JP 222471/82**

(43) Date of publication of application:
**27.06.84 Bulletin 84/26**

(84) Designated Contracting States:
**DE FR GB**

(71) Applicant: **TOKYO SHIBAURA DENKI KABUSHIKI
KAISHA
72, Horikawa-cho Saiwai-ku
Kawasaki-shi Kanagawa-ken 210(JP)**

(72) Inventor: **Watanabe, Toshikatsu
2191-9, Ogawanishimachi
Kodaira-shi Tokyo(JP)**

(74) Representative: **Patentanwälte Henkel, Pfenning, Feiler,
Hänzel & Meinig
Möhlstrasse 37
D-8000 München 80(DE)**

(54) **Process control system.**

(57) A process control system has control stations (3-1, 3-2,...,
3-n) for controlling corresponding processes and a first bus
(5) connected to the control stations (3-1, 3-2,..., 3-n). One of
two gathering stations (21 or 41), as working station, is
connected to the first bus (5), to control the control stations
(3-1, 3-2,..., 3-n), exchange process control data therewith,
store the process control data and convert the format of the
process control data. The process control system also has
another gathering station (41 or 21). The other gathering
station (41 or 21) normally receives and stores the process
control data. When one gathering station (21 or 41) fails to
perform a predetermined operation, the other gathering
station (41 or 21) performs the same operation as said
working station, in accordance with the process control data
stored in the other gathering station (41 or 21). A second bus
(9) is connected to the two gathering stations (21, 41). A
process console (11) monitors processes, to perform central-
ized process control through the second bus (9).

F I G. 2

- 1 -

## Process control system

The present invention relates to an improvement of a process control system for controlling and monitoring a plurality of processes and, more particularly, to an improvement of a process control system having two gathering stations; wherein, when one of the gathering stations generates a fault, the other performs a backup operation.

Functional distribution, architectural distribution and centralized monitoring techniques have been developed in modern process control systems. The centralized monitor system is defined as follows. A control station is disposed near each individual process. A gathering station collects process data from the control stations, and the gathered data is then supplied to a process console installed in a central monitor room. Therefore, an operator can monitor all of the individual processes at the process console. Such process control systems have been developed in consonance with the development of semiconductor techniques, such as recent microcomputer techniques.

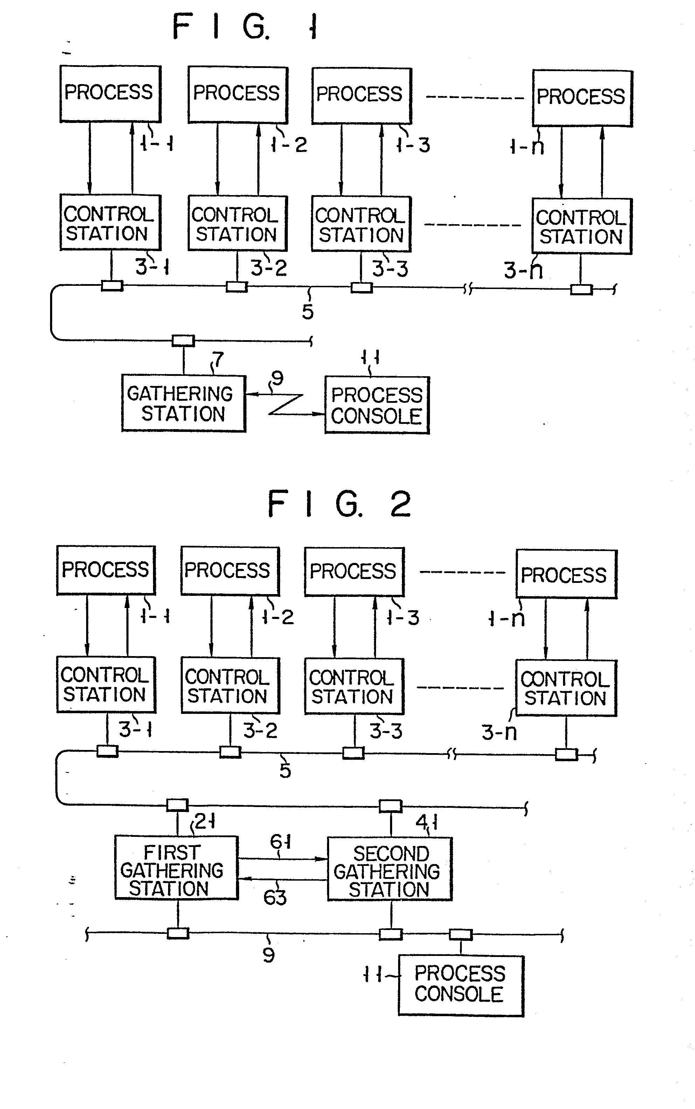

Fig. 1 is a systems diagram of a conventional process control system. In this process control system, control stations 3-1 to 3-n are arranged to respectively control processes 1-1 to 1-n. The control stations 3-1 to 3-n are connected through a first bus 5 having a

- 2 - 0111871

plurality of transmission lines. A gathering station 7 is connected to the first bus 5.

The gathering station 7 controls the control stations 3-1 to 3-n. The gathering station 7 exchanges process control data with the plurality of control stations. The gathering station 7 also stores the process control data and converts the format of the process control data. These operations are performed in detail, as follows. The gathering station 7 supplies commands such as a data request command to the control stations 3-1 to 3-n. The gathering station 7 gathers process data from the control stations 3-1 to 3-n. The gathering station 7 stores the commands described above, the process data from the control stations 3-1 to 3-n, and their address data. Furthermore, the gathering station 7 supplies the stored process data to the control stations 3-1 to 3-n through the first bus 5 or to a process console 11 through a second bus 9. The gathering station 7 controls the transmission procedures of the process data transmitted onto the first bus 5 and the output timing of the process data from the control stations 3-1 to 3-n. The gathering station 7 converts the format of the process data and of the addresses of the first and second buses 5 and 9. The gathering station 7 transmits process control change command data from the process console 11 to the control stations 3-1 to 3-n, as will be described later.

The second bus 9 is connected to the gathering station 7. The process console 11 is connected to the second bus 9. The process console 11 reads out process data from the gathering station 7 as needed. The process console 11 refers to the readout process data and causes a display unit such as a CRT to display an individual process flow and a process sequence, thereby controlling or monitoring the processes 1-1 to 1-n. The process console 11 reads out control parameter data and sequence parameter data from the gathering station 7 to the control stations 3-1 to 3-n in accordance with an instruction of the operator at the process console 11 or with automatic operation, thereby changing the process control.

However, in the process control system having the structure shown in Fig. 1, when the gathering station 7 fails or overruns, means for gathering and storing the process control data from the control stations 3-1 to 3-n malfunctions. For this reason, the process console 11 cannot serve to monitor the processes 1-1 to 1-n or to change the process control. As a result, process control is performed by only the control stations 3-1 to 3-n. In this state, the operator cannot monitor the statuses of the processes 1-1 to 1-n. To solve this problem, two gathering stations are arranged; and, when one of the gathering stations fails to perform a normal operation, the other performs a backup operation. However, according to this backup system, all or a part of process data in the failed gathering station are lost. Therefore, the backup gathering station performs process control in accordance with the status after initiation of the backup operation, irrespective of the previous process control. Therefore, according to the conventional backup system of this type, the processes and the process control system are susceptible to a further critical accident.

Since the present invention has been contrived in view of the above, its primary object is to provide a highly reliable process control system wherein, even if one of the gathering station which is operated fails to perform a normal operation, the other gathering station performs a predetermined operation without deviating from the initial function, on the basis of a series of process control operations, thereby providing proper process monitoring and control.

To achieve the above object of the present invention, a process control system is provided, which comprises: a plurality of control stations respectively connected to a plurality of processes, in such a way as to control said processes; a first bus, connected between said plurality of control stations, for transmitting the process control data which is related to control of said plurality of control stations; two gathering stations connected to said first bus and to each other, being so arranged that one of said two gathering stations serves as a working station to control said plurality of control stations, exchanges the process control data therewith, stores the process control data and converts the format of the process control data; and that the other of said two gathering stations serves as a backup station to receive and store the process control data when said one of said gathering stations performs a predetermined operation, to detect failure of said one of said gathering stations, to control said plurality of control stations, to exchange and store the process control data, and to convert the format of the process control data in accordance with the process control data stored therein, when said one of said gathering stations fails to perform a predetermined operation; a second bus connected to said gathering stations; and a process console, connected to said second bus, for reading out the process control data from said gathering stations, and for monitoring said plurality of processes in a centralized manner.

According to the present invention when the gathering station which serves as the working station fails to perform a predetermined operation, the gathering station which serves as the backup station detects the failure or a fault in the working station. The backup station stores all of the previous process control data and starts an operation in accordance with all previous process control data.

A process control system can thus be provided wherein the normal operating status is properly maintained in accordance with a series of previous process control data, i.e., a series of previous process control, even if the gathering station which serves as the working station fails to function. Furthermore, failure or a fault of the gathering station can be detected in both a software and a hardware manner, thus greatly improving the reliability of the process control system.

This invention can be more fully understood from the following detailed description when taken in conjunction with the accompanying drawings, in which:

Fig. 1 is a block diagram of a conventional process control system;

Fig. 2 is a block diagram of a process control system according to an embodiment of the present invention;

Fig. 3 is a block diagram showing the detailed arrangement of the gathering stations shown in Fig. 2;

Fig. 4 is a circuit diagram of a power fault detector 27;

Fig. 5 is a circuit diagram of a stall alarm detector 29;

Fig. 6 is a circuit diagram of a program status detector 31;

Fig. 7 is a circuit diagram of a signal absence detector;

Figs. 8 to 10 are diagrams showing the formats of signals transmitted onto the first bus; and

Fig. 11 is a circuit diagram of a modification of the stall alarm detector.

One embodiment of the present invention may be described as follows with reference to Figs. 2 to 10. Since the same reference numerals used in Fig. 1 denote the same parts throughout Figs. 2 to 10, a detailed description thereof will be omitted. Fig. 2 shows the system configuration of the process control system according to this embodiment of the present invention.

The main feature of the process control system shown in Fig. 2 lies in the fact that a first gathering station 21 and a second gathering station 41 are connected to a first bus 5. The first and second gathering stations 21, 41 are connected to each other through signal lines 61 and 63. A process console 11 is connected to the first and second gathering stations 21, 41, through a second bus 9. The first and second buses 5, 9 are used to electrically, optically or magnetically transmit the process data.

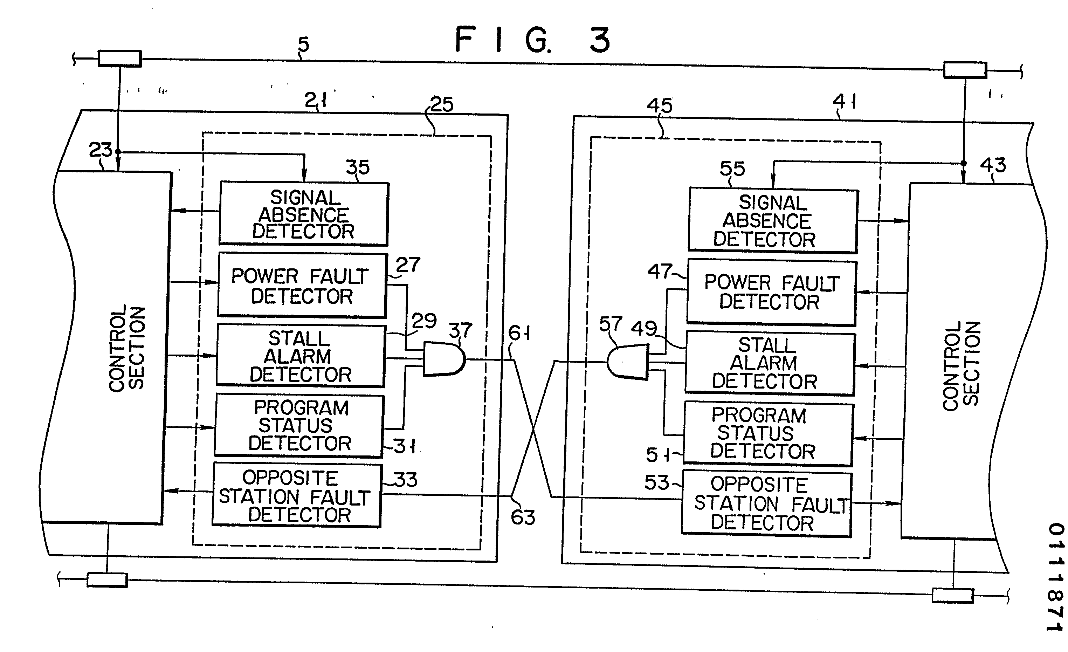

The detailed arrangement of the first and second gathering stations 21 and 41 is shown in Fig. 3. The first gathering station 21 has a control section 23 with a CPU (not shown). The second gathering station 41 has a control section 43 having a CPU (not shown). The first gathering station 21 has a fault detecting means 25, and the second gathering station 41 has a fault detecting means 45. The fault detecting means 25 comprises a power fault detector 27, a stall alarm detector 29, a program status detector 31, an opposite station fault detector 33 and a signal absence detector 35. Similarly, the fault detecting means 45 comprises a power fault detector 47, a stall alarm detector 49, a program status detector 51, an opposite station fault detector 53, and a signal absence detector 55.

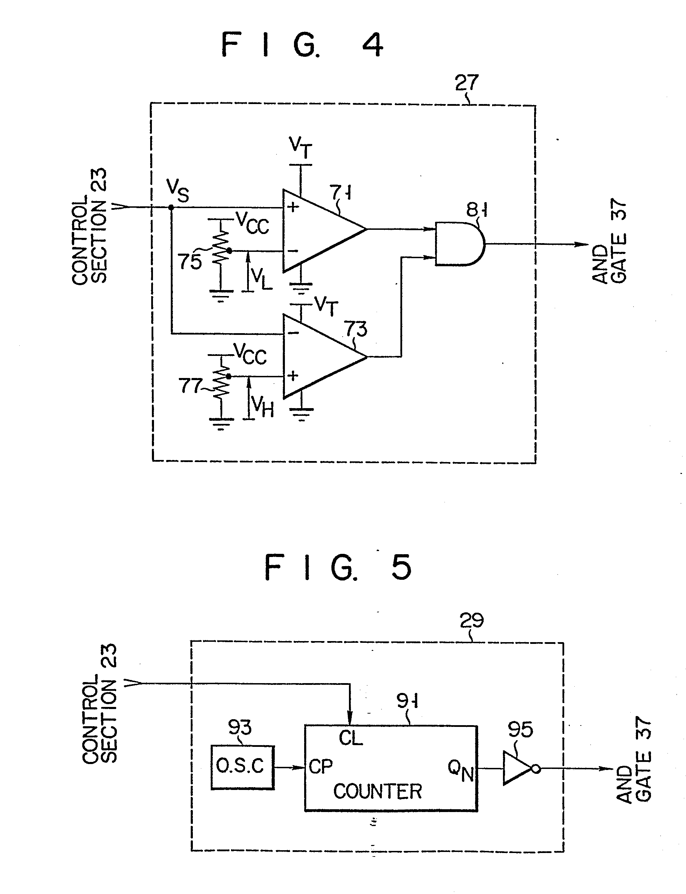

The power fault detector 27 detects a power supply fault (e.g., an abnormal power supply voltage and an overcurrent). Fig. 4 shows the detailed arrangement of the power fault detector 27. This circuit detects if a power supply voltage VS falls within the predetermined range between a lower reference voltage VL and a higher reference voltage VH. The power supply voltage VS is applied to the positive terminal of comparator 71 and the negative terminal of comparator 73. The negative terminal of comparator 71 receives reference voltage VL, and the positive terminal of comparator 73 receives reference voltage VH. The reference voltages VL and VH

- 7 - 0111871

can be obtained by dividing the power supply voltage Vcc with resistors 75 and 77, respectively. In this case, when resistors 75 and 77 respectively comprise variable resistors, reference voltages VL and VH may be arbitrarily set. When the voltage VS exceeds the voltage VL, comparator 71 outputs a high level signal, so that a voltage VT corresponding to logic "1" is supplied to one input terminal of an AND gate 81. AND when the voltage VS is less than the voltage VH, comparator 73 outputs a high level signal. So a voltage VT corresponding to logic "1" is supplied to the other input terminal of the AND gate 81. The AND gate 81 generates a signal of logic "1" only when both inputs are set at logic "1" (i.e., when voltage VS falls within a range between voltage VL and voltage VH).

The stall alarm detector 29 detects an overrun of the first gathering station 21, which is caused by a hardware or software fault. The detailed arrangement of the stall alarm detector 29 is shown in Fig. 5. Referring to Fig. 5, a counter 91 normally counts pulse signals from an oscillator (OSC) 93. On the other hand, the CPU (not shown) of the control section 23 of the first gathering station 21 generates a pulse signal to a clear terminal CL of the counter 91, for every given period, to clear the content of the counter 91. For this reason, in the normal state, an output from a QN terminal of the counter 91 is set at logic "0", and an output from an inverter 95 is set at logic "1". However, when the first gathering station 21 (i.e., when the CPU of the control section 23 of the first gathering station 21) overruns, the CPU does not generate the pulse signal. No pulse signal is supplied from the CPU to the clear terminal CL of the counter 91, and the count of the counter 91 overflows, so that a signal of logic "1" appears at the output terminal QN thereof. As a result, a signal of logic "0" is generated from the inverter 95. Therefore, the stall alarm detector 29 normally generates a signal of logic "1" when the gathering station 21 is operating normally.

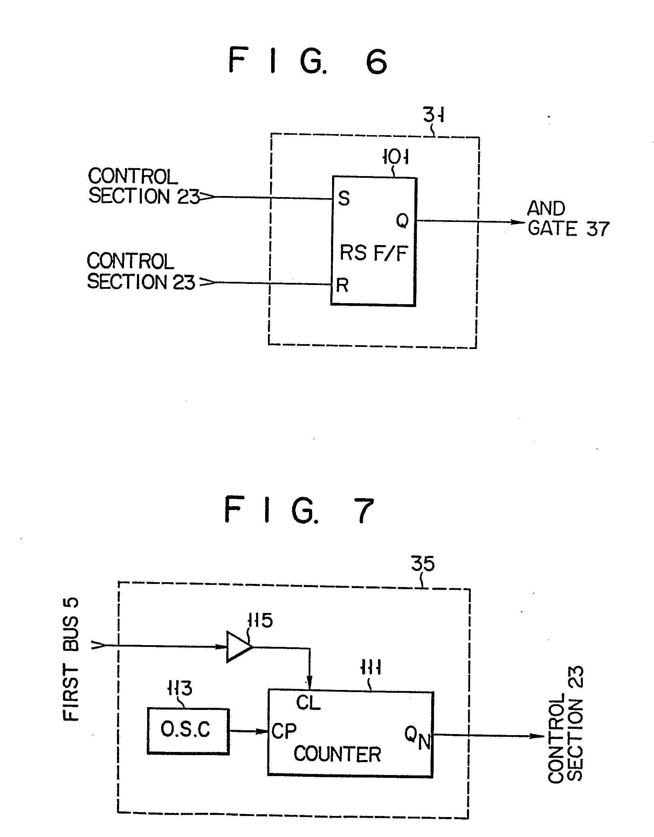

The program status detector 31 detects that the software of the first gathering station 21 is working properly. Fig. 6 shows the detailed arrangement of the program status detector 31. The set and reset terminals of an RS flip-flop (RS F/F) 101 are connected to output ports of the CPU of the control section 23 of the first gathering station 21.

When the CPU detects that the software is working properly, the CPU sets the RS F/F 101. The Q output from the RS F/F 101 is set at logic "1". However, when the CPU detects a software fault, or that the software is not working properly, the CPU resets the RS F/F 101. In this case, the Q output from the RS F/F 101 is set at logic "0".

The output terminals of the power fault detector 27, the stall alarm detector 29 and the program status detector 31 are connected to the three input terminals of a 3-input AND gate 37. The power fault detector 47 in the fault detecting means 45 of the second gathering station 41 has the same arrangement as the power fault detector 27, and is operated in the same manner as the power fault detector 27. The stall alarm detector 49 of the second gathering station 41 has the same arrangement as that of the stall alarm detector 29 of the first gathering station 21, and is operated in the same manner as the stall alarm detector 29. Similarly, the program status detector 51 of the second gathering station 41 has the same arrangement as that of the program status detector 31 of the first gathering station 21, and is operated in the same manner as the program status detector 31. The output terminals of the power fault detector 47, the stall alarm detector 49 and the program status detector 51 of the second gathering station 41 are connected to input terminals of a 3-input AND gate 57. The output terminal of AND gate 37 is connected to the opposite station fault detector 53 of the second gathering station 41, through a signal line 61. The output terminal of the AND gate 57 is connected to the opposite station fault detector 33 of the first gathering station 21 through a signal line 63. The opposite station fault detector 33 detects if a fault has occured in the second gathering station 41. The opposite station fault detector 33 is so arranged that the signal line 63 connected to the output terminal of the AND gate 57 is connected to a buffer, and that the output terminal of the buffer is connected to an input port of the CPU (not shown) of the first gathering station 21. Similarly, the opposite station fault detector 53 of the second gathering station 41 is so arranged that the signal line 61 connected to AND gate 37 is connected to a buffer, and the output terminal of the buffer is connected to an input port of the CPU (not shown) of the control section 43 of the second gathering station 41.

The signal absence detector 35 detects the presence of signals, such as process data and command data transmitted on the first bus 5. When no process data or command data is present on the first bus 5, over a predetermined time interval, the signal absence detector 35 generates a signal which searves as a fault signal. The detailed arrangement of the signal absence detector 35 is shown in Fig. 7. A counter 111 normally counts pulses from an oscillator (OSC) 113. The clock signal is supplied from the first bus 5 to the clear terminal CL of the counter 111 through a buffer 115. When the signal appears on the first bus 5, the counter 111 is properly cleared. However, when no signal appears on the first bus 5, over a predetermined time interval, the counter 111 will not be cleared, and a signal of logic "1" is generated from the output terminal QN thereof. The output terminal QN of the counter 111 is connected to an input port of the CPU of the control section 23 of the gathering station 21. When the first bus 5 comprises a plurality of signal lines, a signal on one of the lines or a signal obtained by logic-ORing part or all of the signal lines may be supplied to the buffer 115.

The signal absence detector 55 of the second gathering station 41 has the same arrangement as that of the first gathering station 21, and is operated in the same manner as the signal absence detector 35.

The operation of the system having the above arrangement may be described as follows. Assuming that the first gathering station 21 and the second gathering station 41 are selected by a switch (not shown), to serve as the working and backup stations, respectively. The working station will serve to control the plurality of control stations 3-1 to 3-n, to exchange and store the process control data and convert the formats thereof. More specifically, the working station will perform the following operations. The working station supplies commands to the control stations 3-1 to 3-n. The working station gathers the process data from the control stations 3-1 to 3-n. Furthermore, the working station stores the commands described above and the process data supplied from the control stations 3-1 to 3-n. The working station supplies the stored process control data to the control stations 3-1 to 3-n or to the process console 11 through the second bus 9. The working station controls the transmission procedures of process data transmitted onto the first bus 5. In addition to these functions, the working station controls to prevent collision of process data transmitted from the control stations 3-1 to 3-n onto the first bus 5. The working station converts the formats such as a process data address format of the first and second buses 5 and 9. The working station reads out the process data which is stored therein in response to the request of the process console 11 and supplies it onto the second bus 9. The working station transmits a process control change command from the process console to the control stations.

On the other hand, the backup station performs the following operations. While the working station is being operated, the backup station receives process control data, such as various items of process data, commands and address data, which data is to be transmitted on the first and second buses 5 and 9. The process control data transmitted on the first and second buses 5, 9 includes the following data: process data from the control stations 3-1 to 3-n; address data of the control stations; commands, address data or stored process data transmitted from the working station to the control stations 3-1 to 3-n; process data and process control change commands transmitted between the process console and the working station; etc. In this manner, the same contents as are stored in the working station are stored in the backup station. When the opposite station fault detector or the signal absence detector of the backup station detects a fault, the backup station starts the same operation as in the working station. When any fault occurs in the working station, the backup station starts the proper and same operation as in the working station. In this case, the backup station is operated in accordance with the series of previous process control data stored therein.

When the process control system is energized and no fault occurs in the first gathering station 21, the first gathering station 21 continues to serve as the working station, and the second gathering station 41 continues to serve as the backup station. In fine, unless the opposite station fault detector 53 or the signal absence detector 55 of the second gathering station 41 detects a fault, the first gathering station 21 continues to serve as the working station and the second gathering station 41 continues to serve as the backup station. The control stations 3-1 to 3-n control the processes 1-1 to 1-n, respectively, and supply the process data onto the first bus 5. In this case, the process console 11 reads out the process data from the first gathering station 21 selected as the working station and causes a display unit such as a CRT to display process data, a process flow and a process sequence, thereby performing centralized monitoring. Meanwhile, the second gathering station 41 is selected to serve as the backup station. The second gathering station 41 stores the process control data transmitted on the first and second buses 5 and 9 as needed. As a result, the storage contents of the second gathering station 41 become the same as those of the first gathering station 21.

Assuming that the power supply voltage VS of the first gathering station 21 drops below the reference voltage VL, the comparator 71 (Fig. 5) will generate a low level signal. For this reason, the low level signal is applied to one input terminal of AND gate 81. AND gate 37 generates a detection signal corresponding to logic "0". The detection signal is supplied to the opposite station fault detector 53 of the second gathering station 41, through the signal line 61. The opposite station fault detector 53 detects at this time that the fault has occurred in the first gathering station 21. The second gathering station 41 subsequently performs the normal and the same operation as the first gathering station 21 which had been serving as the working station. The normal operation is the same as that described above. The first gathering station 21 is repaired as needed, while the second gathering station 41 perform the same operation as the working station. Thereafter, a switch (not shown) is operated to cause the second gathering station 41 to serve as the working station and the first gathering station 21 to serve as the backup station. Alternatively, the first gathering station 21 may be so set as to serve as the working station and the second gathering station 41 may be set as to serve as the backup station.

When the stall alarm detector 29 detects a fault, the stall alarm detector 29 of the first gathering station 21 generates a signal corresponding to logic "0"; and, hence, AND gate 37 generates a signal corresponding to logic "0". When the opposite station fault detector 53 detects the signal of logic "0" from AND gate 37, the second gathering station 41 serves as the working station. Similarly, when the program status detector 31 detects a software fault, or that the software is not working properly, the program status detector 31 generates a signal corresponding to logic "0". AND gate 37 then generates a signal corresponding to logic "0". When the opposite station fault detector 53 detects the signal of logic "0" generated from AND gate 37, the second gathering station 41 perform same operation as the working station.

The fault detection operation of the signal absence detectors 35, 55 will be described hereinafter.

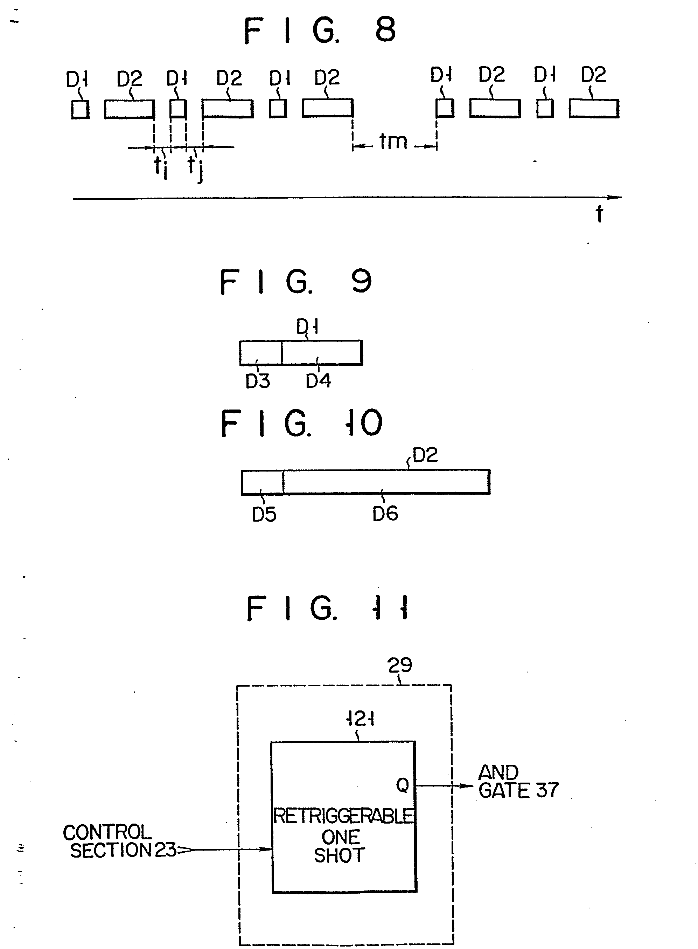

Fig. 8 shows the flow of signals transmitted on the first bus 5. Time is plotted along the axis of abscissa. The first gathering station 21 serving as the working station supplies a process data request signal D1 to the control stations 3-1 to 3-n for every given period, irrespective of the operation of the process console 11. As shown in Fig. 9, the process data request signal D1 generally consists of an address D3 and a command D4. The control stations 3-1 to 3-n send back a data signal D2 to the first and second gathering stations 21 and 41, in response to the process data request signal D1. The data signal D2 generally consists of an address D5 and process data D6, as shown in Fig. 10. As shown in Fig. 8, the response time interval of the data signal D2, with respect to the process data request signal D1, is given as ti, and the time interval between the data signal D2 and the next signal D1 is given as tj. When the first gathering station 21, which serves as the working station, fails to perform a predetermined operation, the time intervals ti or tj exceed time interval tm. The count of the counter 111 (Fig. 7) overflows, and the counter 111 generates a signal corresponding to logic "1". The second gathering station 41, which serves as the backup station, detects that a fault has occurred in the first gathering station 21. From then on, the second gathering station 41 performs same operation as the working station.

Fig. 11 shows another detailed arrangement of an stall alarm detector according to the present invention. In the stall alarm detector 29, the input terminal of a retriggerable monostable multivibrator (retriggerable one shot) 121 is connected to the output port of the CPU of the control section of the gathering station 21. A pulse width of the output pulse from the one shot is properly preset. As previously described, the CPU generates pulses for every given period during normal operation, so that the one shot 121 is periodically retriggered. Since this one shot 121 is of a retriggerable type, the one shot 121 continues to generate pulses. A signal corresponding to logic "1" normally continues to be generated from the Q output terminal of the one shot 121. However, when the CPU starts to overrun, the one shot 121 will not be retriggered and its output corresponds to a signal of logic "0". In this manner, the overrun of the gathering station can be detected. The signal on the first bus may be supplied to the input terminal of the one shot 121 through the buffer. In this case, the one shot 121 serves as the signal absence detector.

When the power fault detector, the stall alarm detector, the program status detector and the opposite station fault detector detect corresponding faults, these faults may be indicated by the corresponding LEDs which serve as alarm means.

Furthermore, the power fault detector, the overrun detector, the program status detector, the signal absence detector, etc., are not limited to the above arrangements, since other general circuit arrangements may be utilized.

In the above embodiment, the first gathering station is selected to serve as the working station, and the second gathering station is selected to serve as the backup station. However, the present invention is not limited to this arrangement. Either gathering station may be selected to serve as the working station, by means of a switching means, such as a switch or software. Furthermore, one of the gathering stations may be preset to be the working station, and the other may be preset to be the backup station. In this case, the opposite station fault detector and the signal absence detector of the working station; and the power fault detector, the stall alarm detector and the program status detector of the backup station need not be used. These components may be arranged as needed. Furthermore, in the above embodiment, only two gathering stations are used. However, three or more gathering stations may be used to store the process data; though it is essential that the number of gathering stations be smaller than the number of control stations, and that only one of the gathering stations be selected to serve as the working station. Even if the working station fails to perform predetermined operation, another backup station may serve as the working station, so that the remaining stations may store the process data. Therefore, the reliability of the system upon a breakdown of the working station can be further improved.

Claims:

1.  A process control system comprising:

a plurality of control stations respectively connected to a plurality of processes, in such a way as to control said processes;

a first bus, connected between said plurality of control stations, for transmitting the process control data which is related to control of said plurality of control stations;

gathering station, connected to said first bus, which serves to control said plurality of control stations, exchange the process control data between said plurality of control stations, store the process control data, and convert the format of the process control data;

a second bus connected to said gathering station means; and

a process console, connected to said second bus, for reading out the process control data from said gathering station and for monitoring said processes to control said processes in a centralized manner, in accordance with the readout process control data;

which process control system is characterized in that

said gathering station means comprises two gathering stations (21, 41) connected to said first bus and to each other, being so arranged that one (21 or 41) of said two gathering stations serves as a working station to control said plurality of control stations (3-1, 3-2,..., 3-n), exchanges the process control data therewith, stores the process control data, and converts the format of the process control data; and that the other (41 or 21) of said two gathering stations serves as a backup station to receive and store the process control data when said one (21 or 41) of said gathering stations performs a predetermined operation, to detect a failure of said one (21 or 41) of said gathering stations, to control said plurality of control stations (3-1, 3-2,..., 3-n), to exchange and store the process control data, and to convert the format of the process control data in accordance with the process control data stored therein, when said one (21 or 41) of said gathering stations fails to perform a predetermined operation.

2. A system according to claim 1, characterized in that said two gathering stations (21, 41) have switching means which may be used to select one of said two gathering stations to serve as said working station and the other to serve as said backup station.

3. A system according to claim 1, characterized in that each of said two gathering stations (21 or 41) includes:

means (27, 29, 31, 37 or 47, 49, 51, 57) for detecting an intra-station fault and generating an intra-station fault signal;

means (33 or 53) for detecting an opposite station fault, which is connected to said intra-station fault detecting means (47, 49, 51, 57 or 27, 29, 31, 37) of the opposite station of said two gathering stations (21 or 41) and detectes the intra-station fault signal therefrom; and

means (35, 55), connected to said first bus (5), for detecting that no process control data is present over a predetermined period of time on said first bus, when said opposite station is serving as said working station.

4. A system according to claim 3, characterized in that each of said intra-station fault detecting means (27, 29, 31, 37 or 47, 49, 51, 57) comprises:

means (27 or 47) for detecting a power fault in the power supply unit supplying power to a corresponding one of said two gathering stations (21 or 41);

means (29 or 49) for detecting an overrun of the

0111871

corresponding one of said two gathering stations (21 or 41); and

means (31 or 51) for detecting that the software of said corresponding one of said two gathering stations (21 or 41) is working properly.

.

# F I G. 1

```
┌─────────┐   ┌─────────┐   ┌─────────┐              ┌─────────┐
│ PROCESS │   │ PROCESS │   │ PROCESS │ ──────────   │ PROCESS │
└─────────┘   └─────────┘   └─────────┘              └─────────┘
    1-1           1-2           1-3          1-n
┌─────────┐   ┌─────────┐   ┌─────────┐              ┌─────────┐
│ CONTROL │   │ CONTROL │   │ CONTROL │ ──────────   │ CONTROL │
│ STATION │   │ STATION │   │ STATION │              │ STATION │
└─────────┘   └─────────┘   └─────────┘              └─────────┘
    3-1           3-2           3-3          3-n
```

                        5

                ┌────────────┐        ┌─────────┐
                │ GATHERING  │ ←──9──  │ PROCESS │
                │  STATION   │         │ CONSOLE │
                └────────────┘         └─────────┘
                      7          11

# F I G. 2

```
┌─────────┐   ┌─────────┐   ┌─────────┐              ┌─────────┐
│ PROCESS │   │ PROCESS │   │ PROCESS │ ──────────   │ PROCESS │
└─────────┘   └─────────┘   └─────────┘              └─────────┘
    1-1           1-2           1-3          1-n
┌─────────┐   ┌─────────┐   ┌─────────┐              ┌─────────┐
│ CONTROL │   │ CONTROL │   │ CONTROL │ ──────────   │ CONTROL │
│ STATION │   │ STATION │   │ STATION │              │ STATION │
└─────────┘   └─────────┘   └─────────┘              └─────────┘
    3-1           3-2           3-3          3-n
```

                        5

        ┌────────────┐         ┌────────────┐
        │   FIRST    │ ──61──→ │   SECOND   │
        │ GATHERING  │         │ GATHERING  │
        │  STATION   │ ←──63── │  STATION   │
        └────────────┘         └────────────┘
              21                     41

                        9
                                ┌─────────┐
                        11 ─    │ PROCESS │
                                │ CONSOLE │
                                └─────────┘

# F I G. 3

| Block | Label |
|---|---|
| 35 | SIGNAL ABSENCE DETECTOR |
| 27 | POWER FAULT DETECTOR |
| 29 | STALL ALARM DETECTOR |
| 31 | PROGRAM STATUS DETECTOR |
| 33 | OPPOSITE STATION FAULT DETECTOR |
| 55 | SIGNAL ABSENCE DETECTOR |
| 47 | POWER FAULT DETECTOR |
| 49 | STALL ALARM DETECTOR |
| 51 | PROGRAM STATUS DETECTOR |
| 53 | OPPOSITE STATION FAULT DETECTOR |

CONTROL SECTION

CONTROL SECTION

0111871

315

0111871

# F I G. 4

# F I G. 5

# F I G. 6

CONTROL
SECTION 23 ▷ ──────── S    Q ────▷ AND
                              GATE 37

                   101

CONTROL
SECTION 23 ▷ ──────── R

                   RS F/F

                   31

# F I G. 7

FIRST BUS 5 ▷ ───────▷ ────┐
                   115     │
                          CL
                   113          111
           ┌──────┐    CP      Q_N ────▷ CONTROL
           │O.S.C │ ──▷              SECTION 23
           └──────┘    COUNTER

                   35

515

# F I G. 8

D1  D2  D1  D2  D1  D2      D1  D2  D1  D2

|← tm →|

$t_i$  $t_j$

t

# F I G. 9

D1

D3  D4

# F I G. 10

D2

D5  D6

# F I G. 11

29

121

CONTROL
SECTION 23

RETRIGGERABLE
ONE
SHOT

Q → AND
GATE 37